# EUROPÄISCHE PATENTSCHRIFT

(11) **EP 1 595 630 B1**
(45) Veröffentlichungstag und Bekanntmachung des Hinweises auf die Patenterteilung: **30.08.2006**
(21) Anmeldenummer: 04010504.1
(22) Anmeldetag: 03.05.2004
(51) Int. Cl.: B23D 47/02, B27B 5/29, B27G 5/02

(54) **Gehrungssäge mit Winkeleinstellung**
Mitre saw with angular adjustment
Scie à onglets avec réglage de la position angulaire

(43) Veröffentlichungstag der Anmeldung: 16.11.2005
(73) Patentinhaber: Metabowerke GmbH, 72622 Nürtingen (DE)
(72) Erfinder: Bergmann, Laurentius, 49733 Haren/Ems (DE)
(74) Vertreter: Gesthuysen, von Rohr & Eggert

(56) Entgegenhaltungen:
- EP-A- 0 779 122
- US-A- 3 487 863
- US-A- 5 207 141
- US-A1- 2003 200 852
- US-A1- 2004 079 214
- PATENT ABSTRACTS OF JAPAN Bd. 1999, Nr. 13, 30. November 1999 (1999-11-30) -& JP 11 226905 A (HITACHI KOKI CO LTD), 24. August 1999 (1999-08-24)

## Beschreibung

Die vorliegende Erfindung betrifft eine Gehrungssäge mit Winkeleinstellung gemäß dem Oberbegriff des Anspruchs 1.

Gehrungssägen der in Rede stehenden Art sind in verschiedenen Ausführungsformen seit längerem bekannt, meist in Zusammenhang mit der Verwendung von Kreissägen. Gehrungssägen mit Winkeleinstellung werden beispielsweise in der Form von Tischkreissägen (DE 297 21 091 U1) oder auch als kombinierte Kapp- und Gehrungssägen (DE 201 14 319 U1, DE 203 13 885 U1) verwendet. Sie werden zur Bearbeitung aller Arten von Werkstoffen eingesetzt. Ein besonderes Anwendungsfeld finden derartige Gehrungssägen bei der Holzbearbeitung. Das schließt nicht aus, daß die Lehre der vorliegenden Erfindung für Gehrungssägen anderer Einsatzgebiete, insbesondere für die Kunststoffbearbeitung und Metallbearbeitung, Anwendung finden kann.

Gehrungssägen der in Rede stehenden Art umfassen üblicherweise einen feststehenden Träger und einen in oder an dem Träger drehbaren Drehtisch, wobei das zu bearbeitende Werkstück auf dem Drehtisch und häufig auch auf einem als Werkstückauflagefläche ausgebildeten Teil des Trägers zu liegen kommt. Eine am Träger installierte Anschlagschiene sichert meist das Werkstück beim Sägevorgang vor Verrutschen, indem das Werkstück beim Sägevorgang gegen die Anschlagschiene gedrückt wird.

Der um eine Hochachse drehbare Drehtisch trägt gleichzeitig eine Halterung für das Sägeaggregat, so daß durch Drehung des Drehtisches auch das Sägeaggregat in gleicher Weise mitbewegt wird. Bei Drehung des Drehtisches aus seiner Mittelstellung heraus schließt die durch das Sägeblatt definierte Schnittebene mit der zu der Mittelstellung korrespondierenden Schnittebene einen Sägewinkel, den Gehrungswinkel, ein. An dem Werkstück kann somit ein Gehrungsschnitt durchgeführt werden. Der Bereich, in dem der Drehtisch aus seiner Mittelstellung herangeschwenkt werden kann, definiert den Arbeitsbereich der Gehrungssäge.

Um einen Gehrungsschnitt sicher durchführen zu können, ist es notwendig, den Drehtisch in der gewählten Winkelstellung zu fixieren. Dazu sind verschiedene konstruktive Maßnahmen bekannt. Üblicherweise erlauben Gehrungssägen die stufenhafte und reproduzierbare Fixierung des Drehtisches in vorgegebenen Winkelstellungen innerhalb ihres Arbeitsbereichs, wie z. B. ± 15°, ± 30°, ± 45° und ± 60° von der Mittelstellung. Zur Fixierung dieser Winkelstellungen dient beispielsweise ein parallel zum Umfang des Drehtisches verlaufender Gehrungsbogen mit Gehrungskerben an den vorgegebenen Winkelstellungen. Ein mit dem Drehtisch verbundener elastischer Rastarm ermöglicht die Fixierung des Drehtisches in der gewünschten Winkelstellung, indem er in die Gehrungskerbe einrastet (DE 201 14 319 U1).

Es ist weiterhin eine Gehrungssäge der in Rede stehenden Art bekannt, bei der die Winkeleinstellung zwei verschiedene Möglichkeiten der Feststellung aufweist. Neben der oben beschriebenen Möglichkeit, den Drehteller nur unter bestimmten Winkeln gegenüber dem Träger zu fixieren, ist es dann z. B. möglich, den Drehteller in beliebigen Winkelstellungen zu fixieren, z. B. durch eine zusätzliche Klemmvorrichtung (DE 203 13 885 U1). Die stufenlos festgelegte Winkelstellung ist allerdings nicht reproduzierbar im Sinne einer leicht wiederauffindbaren Rastposition.

Aus dem Stand der Technik ist auch eine teilautomatische Gehrungssäge bekannt (US 3,487,863 A), die als Teil einer Drehtisch-Fixiervorrichtung einen mit dem Drehtisch fest verbundenen Teilkreis aufweist, auf dem mindestens ein reiterartiger Anschlag stufenlos verschoben und fixiert werden kann.

An dem Träger befindet sich ein vom mittig fest positioniertes Anbauteil mit einer Öffnung und einem in der Öffnung vorgesehenen Schalter. Durch die Position des Anschlags auf dem Teilkreis läßt sich eine Winkelstellung im Arbeitsbereich möglicher Winkelstellungen stufenlos einstellen. Durch das Zusammenwirken des Anschlags mit der Öffnung im Anbauteil ist die eingestellte Winkelstellung mechanisch-konstruktiv reproduzierbar. Die exakte Reproduktion erfordert ein Hinunterdrücken eines federnd gelagerten Stifts in die die Winkelstellung definierende Öffnung des Anbauteils. Damit wird gleichzeitig ein Schalter betätigt, durch den die Gehrungssäge aktiviert, das Sägeblatt angehoben und der Sägeschnitt ausgeführt wird.

Zweckmäßig ist, daß die Wahl der Winkelstellung nicht auf einige wenige vorherbestimmte Winkel beschränkt ist. Der Begriff "Winkeleinstellung" ist dabei im Sinne einer leicht auffindbaren zusätzlichen Rastposition im Schwenk- und damit Arbeitsbereich der manuellen Gehrungssäge zu verstehen, die nicht nur auf einen geringen, der Feinjustierung dienenden Teil des Arbeitsbereichs beschränkt ist. Dadurch ist ein sicheres und effizientes Arbeiten möglich, da aufwendige Justierarbeiten beim Wiederauffinden der stufenlosen Winkelstellung im Arbeitsbereich entfallen. Setzt man am Teilkreis mehrere Anschläge an, so kann man auch mehrere stufenlos eingestellte und zugleich reproduzierbar erreichbare Winkelstellungen realisieren.

Die Handhabung der Winkeleinstellung bei der bekannten Gehrungssäge erfordert eine unmittelbare Einstellung des Anschlags auf dem Teilkreis. Die Position des Drehtisches, des Teilkreises und des Anschlags relativ zu dem Anbauteil am Träger sind also aufeinander abzugleichen.

Ausgangspunkt für die Lehre der vorliegenden Erfindung ist eine Gehrungssäge mit Winkeleinstellung, bei der neben der ersten Drehtisch-Fixiervorrichtung für bestimmte feste Winkelstellungen ebenfalls eine zweite Drehtisch-Fixiervorrichtung vorgesehen ist (US 2004/0079214 A1). Mittels der zweiten Drehtisch-Fixiervorrichtung können die mechanisch-konstruktiv vorgegebenen Winkelstellungen der ersten Drehtisch-Fixiervorrichtung gemeinsam und stufenlos im Sinne einer Feinjustierung verstellt werden. Das geschieht über eine am Träger drehbar, allerdings nur in einem engen Bereich um eine Nullstellung herum gelagerte Basis. Der Drehtisch ist auch gegenüber dieser Basis drehbar. Zwischen dem Drehtisch und der Basis ist ein Arretierungsmittel wirksam. Dieses ist identisch mit dem Fixierungsmittel für die mechanisch-konstruktiv vorgegebene Winkelstellung der ersten Drehtisch-Fixiervorrichtung.

Ausgehend von der zuvor erläuterten Gehrungssäge mit Winkeleinstellung und zwei Drehtisch-Fixiervorrichtungen liegt der Lehre das Problem zugrunde, die Gehrungssäge so auszugestalten und weiterzubilden, daß neben den bestimmten festen Winkelstellungen eine Winkelstellung im kompletten Drehbereich des Drehtisches stufenlos wählbar und zugleich mechanisch-konstruktiv reproduzierbar und sicher einstellbar ist, wobei die Position der bestimmten festen Winkelstellungen nicht geändert wird.

Die zuvor aufgezeigte Problemstellung ist gelöst bei einer Gehrungssäge mit den Merkmalen des Oberbegriffs 1 von Anspruch 1 durch die Merkmale des kennzeichnenden Teils von Anspruch 1.

Die beiden Drehtisch-Fixiervorrichtungen der erfindungsgemäßen Gehrungssäge sind unabhängig voneinander. Auch die zweite Drehtisch-Fixiervorrichtung betrifft den kompletten Drehbereich des Drehtisches, der nur durch die Maximalpositionen begrenzt ist. Die Basis kann über den gesamten Drehbereich vom Drehtisch mitgeführt werden. Ist die Basis nicht am Träger fixiert, sondern gelöst und damit gegenüber dem Träger drehbar, und ist die Basis ferner über das Arretierungsmittel mit dem Drehtisch verbunden, so kann der Drehtisch die Basis drehend mitführen. Durch Drehen des Drehtisches kann man somit einerseits unmittelbar die Lage des Drehtisches verändern, andererseits mittelbar die Lage der Basis.

Nach bevorzugter Lehre handelt es sich bei der Basis um einen Rastarm, der mittels einer Rastarm-Fixiervorrichtung in beliebiger Winkelstellung am Träger fixierbar ist.

Es gibt eine Vielzahl von Möglichkeiten, die Lehre der Erfindung auszugestalten und weiterzubilden. Dazu darf auf die Unteransprüche verwiesen werden. Zu einzelnen Unteransprüchen sind noch besondere Bemerkungen angezeigt.

Soll mit der oben beschriebenen Konstruktion eine Winkelstellung stufenlos und reproduzierbar definiert werden, so ist der Drehtisch zunächst so über die Basis zu bewegen, daß sich Basis und Drehtisch über das Arretierungsmittel miteinander verbinden. Nach Lösen der Rastarm-Fixiervorrichtung ist die Basis frei drehbar. Sie folgt nun aufgrund der Wirkung des Arretierungsmittels der weiteren Drehung des Drehtisches in die gewünschte Winkelstellung. Durch Anziehen der Rastarm-Fixiervorrichtung ist die Basis in der nun erreichten Winkelstellung fixierbar. Wenn der Drehtisch nun in seine erste - oder eine andere- Winkelstellung zurückkehren soll, kann der Drehtisch durch Lösen der über das Arretierungsmittel bewirkten Verbindung von Drehtisch und Basis von der Basis getrennt werden, ohne daß die Basis die zuvor definierte Winkelstellung verliert. Der nunmehr frei bewegliche Drehtisch läßt sich sodann ohne weiteres in eine andere bzw. in die erste Winkelstellung bringen.

Das Wiederauffinden der zuvor definierten Winkelstellung ist sehr einfach möglich. Hierzu muß lediglich der Drehtisch aus der ersten Winkelstellung freigegeben und in Richtung der durch die fixierte Basis definierten Winkelstellung gedreht werden, bis der Drehtisch durch das Arretierungsmittel an der Basis und damit in der zuvor definierten Winkelstellung fixiert wird.

Nach den Ansprüchen 8 und 9 läßt sich das Arretierungsmittel besonders vorteilhaft als ein Kugel-Schnappverschluß ausbilden, wobei das Arretierungsmittel dann aus einer am Drehtisch befestigten Kugelhalterung mit einer Kugel und einer der Basis zugeordneten Kugelaufnahme besteht, wobei Kugel und Kugelauf nahme federnd gegeneinander verspannt sind und die Kugel demzufolge in der stufenlosen und reproduzierbaren Winkelstellung in die Kugelaufnahme einschnappt.

Im folgenden wird nun die Erfindung anhand einer lediglich ein Ausführungsbeispiel darstellenden Zeichnung näher erläutert. In der Zeichnung zeigt
- Fig. 1: ein bevorzugtes Ausführungsbeispiel einer Gehrungssäge im montierten Zustand,
- Fig. 2: die Gehrungssäge aus Fig. 1 mit demontiertem Drehtisch,
- Fig. 3: die unterseitige Ansicht des Drehtisches aus Fig. 1 und
- Fig. 4a,: b eine Detailansicht der Gehrungssäge aus Fig. 2 zur Verdeutlichung des Arretierungsmittels.

Im folgenden wird die beanspruchte Gehrungssäge anhand eines bevorzugten Ausführungsbeispiels einer Kapp- und Gehrungssäge beschrieben. Genausogut könnte die Erfindung auch anhand einer beliebigen anderen Gehrungssäge beschrieben werden, wie z. B. anhand einer Tischkreissäge, die das Ausführen von Gehrungsschnitten erlaubt. Ganz allgemein ist also die einzige Voraussetzung für die Verwirklichung der Lehre lediglich die Funktion der Gehrungssäge. Weiterführende Funktionalitäten, die Gehrungssägen aufweisen können, wie z. B. Kapp-, Schifter- und Zugfunktion können jeweils vorhanden sein, müssen dies aber nicht.

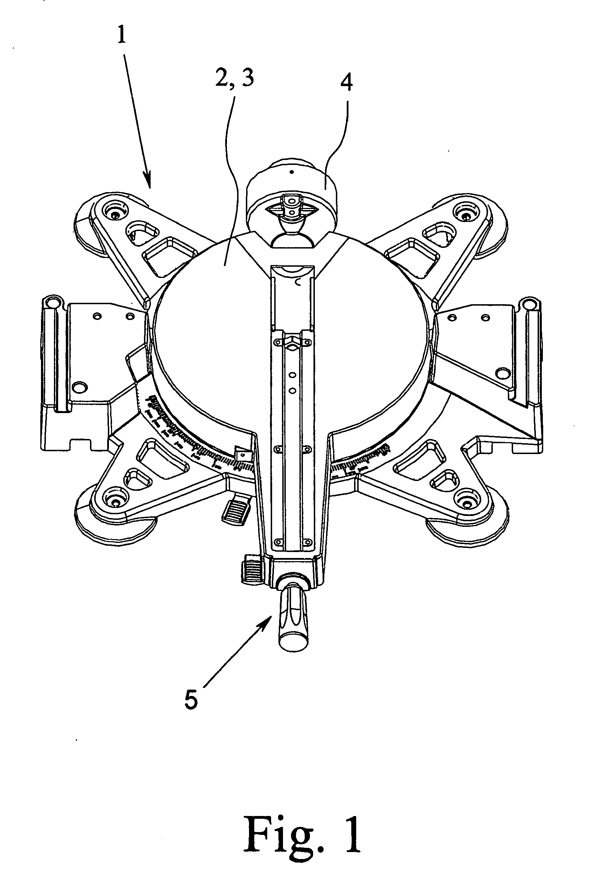

Die in den Figuren dargestellte Gehrungssäge ist auf die wesentlichen, für die Erläuterung der Erfindung notwendigen Bestandteile beschränkt. So besteht die in Fig. 1 dargestellte erfindungsgemäße Gehrungssäge im wesentlichen lediglich aus einem Träger 1 und einem eine Werkstückauflagefläche 2 bildenden Drehtisch 3. Alle weiteren für eine Kapp- und Gehrungssäge zwar funktionsnotwendigen, aber zur Erläuterung der Erfindung nicht notwendigen Bestandteile, wie z. B. eine an einer hier angedeuteten Neigungsanordnung 4 angebrachte Halterung mit einem schwenkbaren Sägeaggregat, sind in den Figuren absichtlich weggelassen worden, um den Blick auf das wesentliche zu lenken.

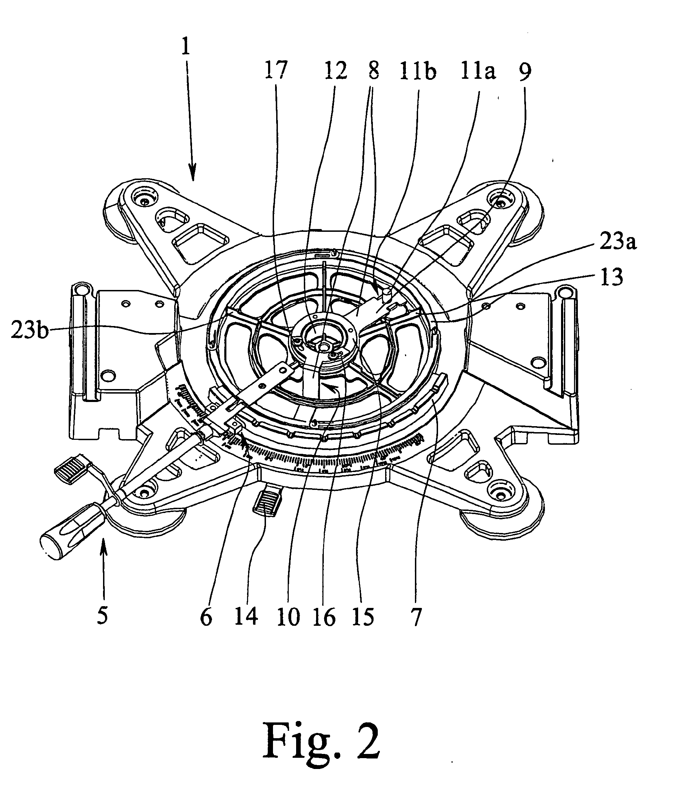

Fig. 2 zeigt die erfindungsgemäße Gehrungssäge ohne Drehtisch 3, wobei ein normalerweise an dem Drehtisch 3 befestigtes Betätigungselement 5 hier weiterhin dargestellt ist, um die Funktionsweise veranschaulichen zu können.

Über das Betätigungselement 5 ist eine Drehtisch-Fixiervorrichtung 6 bedienbar, über die der Drehtisch 3 gegenüber dem Träger 1 gestuft und reproduzierbar fixiert werden kann, indem die Drehtisch-Fixiervorrichtung 6 beispielsweise in Eingriff mit den in einem Gehrungsbogen 7 vorgesehenen Gehrungskerben gerät. Die Gehrungskerben sind so in dem entlang des Umfangs des Drehtisches 3 verlaufenden Gehrungsbogen 7 angeordnet, daß mit der Drehtisch-Fixiervorrichtung 6 einige wenige vorgegebene erste Winkelstellungen gestuft eingestellt werden können.

Wie genau die Fixierung der ersten Winkelstellung mit Hilfe der gestuften Drehtisch-Fixiervorrichtung 6 konstruktiv gelöst ist, ob dies durch Eingriff der Drehtisch-Fixiervorrichtung 6 mit den Gehrungskerben des Gehrungsbogens 7 geschieht, oder in anderer, dem Fachmann geläufigen Weise, ist für den Gegenstand der vorliegenden Erfindung unerheblich; es bleibt dem Fachmann überlassen, die Drehtisch-Fixiervorrichtung 6 zur Einstellung bestimmter, reproduzierbarer Winkelstellungen in geeigneter Weise umzusetzen; hierzu wird nochmals auf den weiter oben genannten Stand der Technik verwiesen.

Das Ausführungsbeispiel in Fig. 2 zeigt weiterhin eine bevorzugte Drehtisch-Fixiervorrichtung 8, mit der es zusätzlich möglich ist, den Drehtisch 3 gegenüber dem Träger 1 in einer weiteren zweiten Winkelstellung zu fixieren, wobei der besondere, erfindungsgemäße Vorteil dadurch erzielt wird, daß die zweite Winkelstellung zugleich stufenlos und reproduzierbar ist. Stufenlos bedeutet, daß im Gegensatz zur ersten, oben dargestellten Drehtisch-Fixiervorrichtung 6 nicht nur einige wenige Winkelstellungen auswählbar sind, sondern daß auch beliebige andere Winkelstellungen, vollkommen unabhängig von vorgegebenen Rastmarken, eingestellt werden können.

Unter der Reproduzierbarkeit einer Winkelstellung wird im Rahmen der vorliegenden Erfindung nicht alleine die grundsätzliche Möglichkeit des Wiederauffindens einer einmal gewählten Winkelstellung verstanden, wie z. B. das durch Drehung des Drehtisches 3 durch den Benutzer vorzunehmende Aufeinanderausrichten zweier optischer Marken (z. B. Nonius). Vielmehr wird darunter verstanden, daß die Reproduktion einer Winkelstellung durch eine mechanische, konstruktive Maßnahme, wie z. B. eine leicht auffindbare zusätzliche Rastposition, sichergestellt wird.

Das in Fig. 2 dargestellte bevorzugte Ausführungsbeispiel einer erfindungsgemäßen Gehrungssäge zeigt die Drehtisch-Fixiervorrichtung 8, die vorliegend aus einer zu einem Rastarm ausgebildeten Basis 9, einer Rastarm-Fixiervorrichtung 10 und einem Arretierungsmittel 11a, b besteht, wobei der Rastarm 9 und die Rastarm-Fixiervorrichtung 10 drehbar auf einer zylindrischen Halterung 12 des Trägers 1 gelagert sind. Die zylindrische Halterung 12 umschließt dabei gleichzeitig konzentrisch die Drehachse des Drehtisches 3.

Der Rastarm 9 ist mit Hilfe der Rastarm-Fixiervorrichtung 10 in beliebiger Winkelstellung bezüglich dem Träger 1 fixierbar, und über das Arretierungsmittel 11a, b läßt sich der Drehtisch 3 lösbar mit dem Rastarm 9 verbinden.

Mit Hilfe des gegenüber dem Träger 1 stufenlos feststellbaren und mit dem Drehtisch 3 verbindbaren Rastarms 9 ist nun eine stufenlos einstellbare Winkelstellung des Drehtisches 3 beliebig oft reproduzierbar möglich, was im folgenden ausführlich beschrieben wird.

Hierzu sei zunächst angenommen, daß der Drehtisch 3 auf dem Träger 1 montiert ist, insbesondere so, daß der Drehtisch 3 über eine Gleitführung 13 auf dem Träger 1 aufliegt. Weiterhin sei angenommen, daß in der Ausgangsstellung der Rastarm 9 mit dem Drehtisch 3 über das Arretierungsmittel 11 a, b verbunden ist. Durch Lösen der Rastarm-Fixiervorrichtung 10 ist der Rastarm 9 um die zylindrische Halterung 12 frei drehbar, und er folgt somit stufenlos einer durch den Benutzer vorgenommenen Drehung des Drehtisches 3 in die gewünschte zweite Winkelstellung.

Durch Anziehen der Rastarm-Fixiervorrichtung 10 kann der Rastarm 9 in der zweiten stufenlos eingestellten Winkelstellung sicher fixiert werden. Durch Lösen der durch das Arretierungsmittel 11a, b verursachten Verbindung von Drehtisch 3 und Rastarm 9 kann der Drehtisch 3 in eine beliebige andere Position, z. B. die erste Winkelstellung, versetzt werden, wobei der ― die zweite Winkelstellung definierende ― Rastarm 9 währenddessen ortsfest ist. Wenn die zweite Winkelstellung des Drehtisches 3 wieder aufgefunden werden soll, ist der Drehtisch 3 lediglich wieder in Richtung der zweiten Winkelstellung zu drehen, so lange, bis der Drehtisch 3 wieder mit dem Rastarm 9 über das Arretierungsmittel 11a, b fixiert ist.

Die Rastarm-Fixiervorrichtung 10 ist in dem dargestellten bevorzugten Ausführungsbeispiel so ausgeführt, daß die zylindrische Halterung 12 und die Rastarm-Fixiervorrichtung 10 über korrespondierende Gewindegänge miteinander in Eingriff stehen und der Rastarm 9 durch Schraubwirkung zwischen der Rastarm-Fixiervorrichtung 10 und dem Träger 1 eingespannt und somit fixiert werden kann. Dabei weist der Bereich der zylindrischen Halterung 12, der vom Rastarm 9 umschlossen wird und/oder der Rastarm 9 kein Gewinde auf, damit die Beweglichkeit des Rastarms 9 im Falle der gelösten Rastarm-Fixiervorrichtung 10 sichergestellt ist.

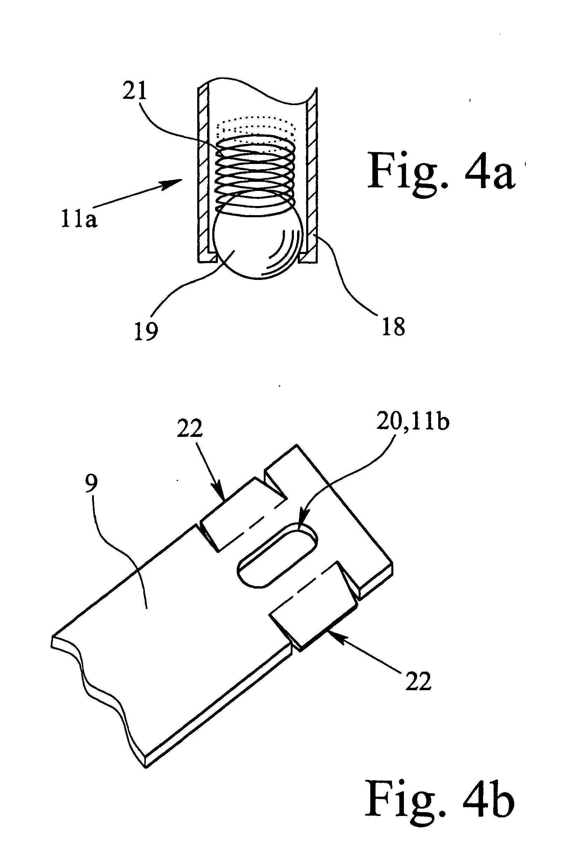

In den Fig. 2 und 4 ist eine bevorzugte Ausführungsform der Rastarm-Fixiervorrichtung 10 dargestellt, wobei die Rastarm-Fixiervorrichtung 10 zweigeteilt aufgebaut ist, nämlich ein Rastarm-Betätigungselement 14 und ein Rastarm-Schraubelement 15 umfaßt. Dabei sind die beiden genannten Elemente so konstruiert, daß sie miteinander in beliebiger Drehstellung zueinander verbunden werden können.

Dies bringt den fertigungstechnischen Vorteil mit sich, daß das von dem Bediener zu bedienende Rastarm-Betätigungselement 14 immer in gleicher Art und Weise in Bezug auf den Träger 1 montierbar ist. Damit ist gemeint, daß die durch Drehen des Rastarm-Betätigungselements 14 vorzunehmende Lösung und Festsetzung des Rastarms 9 immer in den gleichen Stellungen relativ zum Träger 1 vornehmbar ist. Diese Eigenschaft wird in dem dargestellten bevorzugten Ausführungsbeispiel dadurch erzielt, daß das Rastarm-Schraubelement 15 mit dem Rastarm-Betätigungselement 14 über eine justierbare Langloch-Zapfenverbindung 16, 17 verbunden ist.

Es sind verschiedene Möglichkeiten denkbar, das Arretierungsmittel 11a, b auszubilden. In der in Fig. 2 und in einer Detailansicht in Fig. 4a, b dargestellten bevorzugten Ausführungsform ist das Arretierungsmittel 11a, b zweigeteilt und zu einem Teil 11a dem Drehtisch 3 und zum anderen Teil 11b dem Rastarm 9 zugeordnet.

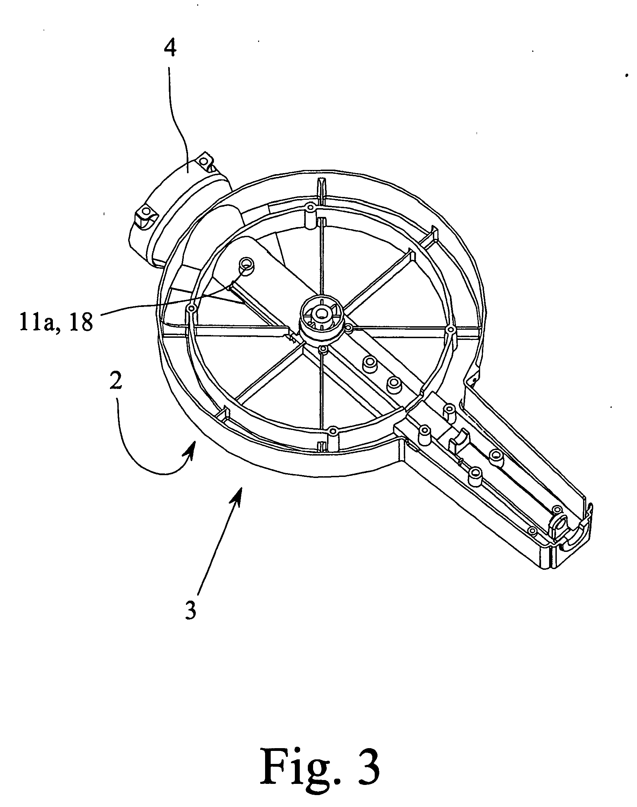

Um die Funktionsweise des Arretierungsmittels 11 a, b zu verdeutlichen, zeigt Fig. 2 auch den Teil 11a des Arretierungsmittels 11a, b, der dem Drehtisch 3 zugeordnet ist, obwohl der Drehtisch 3 nicht dargestellt ist. Tatsächlich ist der Teil 11 a des Arretierungsmittels 11a, b fest dem Drehtisch 3 zugeordnet, was in Fig. 3 deutlich zu sehen ist. Wie bereits weiter oben beschrieben worden ist, gelangen die beiden Teile des Arretierungsmittels 11a, b durch Drehen des Drehtisches 3 in Eingriff, so daß als Konsequenz auch der Drehtisch 3 mit dem Rastarm 9 verbunden werden kann.

Eine bevorzugte Ausführungsform des Arretierungsmittels 11a, b zeigt Fig. 4a, b. Der dem Drehtisch 3 zugeordnete Teil 11 a des Arretierungsmittels 11a, b besteht hier aus einer Kugelhalterung 18 mit einer Kugel 19. Die Kugelhalterung 18 ist auch in Fig. 2 und 3 zu erkennen. Das offene und im Montagezustand des Drehtisches 3 zum anderen Teil 11b des Arretierungsmittels 11a, b weisende Ende der Kugelhalterung 18 ist so ausgestaltet, daß die Kugel 19 fest in der Kugelhalterung 18 gehalten wird und teilweise aus dem offenen Ende der Kugelhalterung 18 herausragen kann.

Der andere Teil 11b des Arretierungsmittels 11a, b ist entsprechend als eine Kugelaufnahme 20 in dem Rastarm 9 ausgebildet. Die Kugelaufnahme 20 besteht vorzugsweise aus einer im Rastarm 9 vorgesehenen Aussparung oder Vertiefung. Der dem Drehtisch 3 zugeordnete Teil 11a des Arretierungsmittels 11a, b ist derart angeordnet, daß er im Montagezustand der erfindungsgemäßen Gehrungssäge in den, dem Rastarm 9 zugeordneten, korrespondierenden anderen Teil 11 b des Arretierungsmittels 11a, b, also in die Kugelaufnahme 20, einrasten kann. Dies geschieht unter Überwindung eines gewissen Widerstandes beim drehenden Übereinanderschieben beider Teile des Arretierungsmittels 11 a, b, also beim Drehen der Kugelhalterung 18 mit der Kugel 19 in die Kugelaufnahme 20.

Fig. 4a zeigt eine Detailansicht der Kugelhalterung 18. In dem dargestellten bevorzugten Ausführungsbeispiel wird die Kugel 19 durch eine Feder 21 gegen die Öffnung der Kugelhalterung 18 gedrückt. Die durch die Federlagerung der Kugel 19 in der Kugelhalterung 18 erzielte Elastizität des Arretierungsmittels 11a, b läßt sich zusätzlich dadurch verbessern, daß vorzugsweise auch der Rastarm 9 elastisch ausgebildet ist, insbesondere so, daß eine elastische Verformung des Rastarmes 9 im wesentlichen in axialer Richtung der zylindrischen Halterung 12 vorgesehen ist, also in Richtung der Hochachse, um die sich der Drehtisch 3 dreht. In einem weiteren, hier nicht dargestellten Ausführungsbeispiel der erfindungsgemäßen Gehrungssäge wird auf eine elastische Lagerung der Kugel 19 in der Kugelhalterung 18 verzichtet und nur der Rastarm 9 in der oben beschriebenen Weise elastisch ausgebildet.

Das Arretierungsmittel 11a, b ist vorzugsweise so ausgebildet, daß ein "sanftes" Einrasten beider Teile des Arretierungsmittels 11a, b möglich ist. Im Falle der in den Fig. 2 und 4 dargestellten Ausgestaltung des Arretierungsmittels 11 a, b wird dies dadurch erreicht, daß die sich bei Drehung des Drehtisches 3 ergebenden ersten Berührstellen 22 zwischen der Kugel 19 und dem Rastarm 9 rampenförmig abgeflacht sind, so daß sich ein Widerstand gegen die Drehbewegung kontinuierlich aufbauen kann, bis die Kugel 19 in die Kugelaufnahme 20 sprungartig einrastet.

In dem in Fig. 2 dargestellten bevorzugten Ausführungsbeispiel sind am Träger 1 Anschläge 23a, b vorgesehen, die die Bewegung des Rastarms 9 und damit die Maximalpositionen möglicher zweiter Winkelstellungen begrenzen. Die dargestellten Anschläge 23a, b markieren vorzugsweise betragsmäßig unterschiedliche Winkelstellungen. Die beiden unterschiedlichen, durch die Anschläge 23a, b bezeichneten Winkelstellungen liegen vorzugsweise bei 50° und 60°.

## Patentansprüche

1. Gehrungssäge mit Winkeleinstellung mit
einem Träger (1),
einem am oder im Träger (1) drehbar angeordneten, eine Werkstückauflagefläche (2) bildenden Drehtisch (3),
einer ersten Drehtisch-Fixiervorrichtung (6) und
einer zweiten Drehtisch-Fixiervorrichtung (8),
wobei der Drehbereich des Drehtisches (3) gegenüber dem Träger (1) durch Maximalpositionen begrenzt ist,
wobei mittels eines Fixierungsmittels (7) der ersten Drehtisch-Fixiervorrichtung (6) der Drehtisch (3) gegenüber dem Träger (1) in bestimmten, mechanisch-konstruktiv vorgegebenen Winkelstellungen innerhalb des Drehbereichs fixierbar ist,
wobei die zweite Drehtisch-Fixiervorrichtung (8) eine am Träger (1) drehbar gelagerte Basis (9) aufweist,
wobei der Drehtisch (3) auch gegenüber der Basis (9) drehbar ist,
wobei ein zwischen dem Drehtisch (3) und der Basis (9) wirkendes Arretierungsmittel (11a, b) vorgesehen ist,
wobei in einer bestimmten Drehstellung des Drehtisches (3) relativ zur Basis (9) der Drehtisch (3) mit der Basis (9) über das Arretierungsmittel (11a, b) lösbar verbunden ist und
wobei die Basis in der Lage, in der sie nicht am Träger fixiert, aber über das Arretierungsmittel (11a, b) mit dem Drehtisch (3) verbunden ist, vom Drehtisch (3) drehend mitführbar ist,
**dadurch gekennzeichnet,**
**daß** die zweite Drehtisch-Fixiervorrichtung (8) unabhängig von der ersten Drehtisch-Fixiervorrichtung (6) ist,
**daß** die Basis (9) der zweiten Drehtisch-Fixiervorrichtung (8) am Träger (1) indes Drehtisches (3) nerhalb des kompletten Drehbereichs des Drehtisches (3) in beliebiger Drehstellung fixierbar ist und
**daß** das Arretierungsmittel (11a, b) der zweiten Drehtisch-Fixiervorrichtung (8) von dem Fixierungsmittel (7) der ersten Drehtisch-Fixiervorrichtung (6) unabhängig ist.

2. Gehrungssäge nach Anspruch 1, **dadurch gekennzeichnet,**
**daß** die zweite Drehtisch-Fixiervorrichtung (8) einen Rastarm als Basis (9) sowie eine Rastarm-Fixiervorrichtung (10) aufweist und daß der die Basis bildende Rastarm (9) durch die Rastarm-Fixiervorrichtung (10) in beliebiger Winkelstellung am Träger (1) fixierbar ist.

3. Gehrungssäge nach Anspruch 2, **dadurch gekennzeichnet,**
**daß** der Rastarm (9) auf einer zylindrischen Halterung (12) des Trägers (1) drehbar gelagert ist.

4. Gehrungssäge nach Anspruch 3, **dadurch gekennzeichnet,**
**daß** die zylindrische Halterung (12) und die Rastarm-Fixiervorrichtung (10) über korrespondierende Gewindegänge miteinander in Eingriff stehen und daß der Rastarm (9) somit durch eine Schraubspannwirkung zwischen der Rastarm-Fixiervorrichtung (10) und dem Träger (1) festklemmbar ist.

5. Gehrungssäge nach Anspruch 3 oder 4, **dadurch gekennzeichnet,**
**daß** die Rastarm-Fixiervorrichtung (10) ein Rastarm-Betätigungselement (14) und ein mit der zylindrischen Halterung (12) in Schraubeingriff stehendes Rastarm-Schraubelement (15) aufweist.

6. Gehrungssäge nach Anspruch 5, **dadurch gekennzeichnet,**
**daß** das Rastarm-Betätigungselement (14) mit dem Rastarm-Schraubelement (15) mittels einer Langloch-Zapfenverbindung (16, 17) verbunden ist.

7. Gehrungssäge nach einem der Ansprüche 1 bis 6, **dadurch gekennzeichnet,**
**daß** das Arretierungsmittel (11a, b) zu einem Teil (11a) dem Drehtisch (3) und zum anderen Teil (11b) der Basis (9) zugeordnet ist, und daß bei fixierter Basis (9) durch Drehen des Drehtisches (3) der eine Teil (11a) des Arretierungsmittels (11a, b) in Eingriff mit dem anderen Teil (11 b) des Arretierungsmittels (11a, b) bringbar ist.

8. Gehrungssäge nach Anspruch 7, **dadurch gekennzeichnet,**
**daß** der eine Teil (11a) des Arretierungsmittels (11a, b) eine Kugelhalterung (18) mit einer Kugel (19) aufweist, daß der andere Teil (11b) des Arretierungsmittels (11a, b) als eine Kugelaufnahme (20) in der Basis (9) ausgebildet ist, mit der die Kugel (19) in Eingriff bringbar ist.

9. Gehrungssäge nach Anspruch 8, **dadurch gekennzeichnet,**
**daß** der eine Teil (11a) und/oder der andere Teil (11b) des Arretierungsmittels (11a, b) elastisch ausgebildet ist, insbesondere indem die Kugel (19) durch eine Feder (21) in der Kugelhalterung (18) vorgespannt ist und/oder die Basis (9) einer - insbesondere in bzw. parallel zur Richtung der Drehachse des Drehtisches (3) wirkenden - Kraft federnd nachgibt.

10. Gehrungssäge nach Anspruch 8 oder 9, **dadurch gekennzeichnet,**
**daß** der der Basis (9) zugeordnete Teil (11b) des Arretierungsmittels (11a, b) an den sich bei Drehung des Drehtisches (3) mit der Kugel (19) ergebenden Berührstellen (22) rampenförmig abgeflacht ist.

11. Gehrungssäge nach einem der Ansprüche 1 bis 10, **dadurch gekennzeichnet,**
**daß** der Träger (1) mindestens einen Anschlag (23a, b) umfaßt, der die Drehbewegung der Basis (9) in einer maximalen Winkeleinstellung begrenzt.

12. Gehrungssäge nach Anspruch 11, **dadurch gekennzeichnet,**
**daß** im Falle mehrerer Anschläge (23a, b) durch die Anschläge (23a, b) unterschiedliche Winkelstellungen definiert werden, insbesondere 50° und 60° gegenüber einer Mittelstellung.

## Claims

1. Mitre saw with angular adjustment, having
a support (1),
a rotary table (3) rotatably disposed in the support (1) and forming a workpiece bearing surface (2),
a first rotary table fixing apparatus (6) and
a second rotary table fixing apparatus (8),
wherein the range of rotation of the rotary table (3) in relation to the support (1) is limited by maximal positions,
wherein, by means of a fixing means (7) of the first rotary table fixing apparatus (6), the rotary table (3) can be fixed in relation to the support (1) in certain angular settings within the range of rotation, which angular settings are predefined in mechanical design terms,
wherein the second rotary table fixing apparatus (8) has a base (9) mounted rotatably on the support (1),
wherein the rotary table (3) is rotatable also in relation to the base (9),
wherein a locking means (11a, b), acting between the rotary table (3) and the base (9), is provided,
wherein, in a certain rotary setting of the rotary table (3) relative to the base (9), the rotary table (3) is detachably connected to the base (9) by the locking means (11a, b), and
wherein the base, in the position in which it is not fixed to the support yet is connected to the rotary table (3) by the locking means (11a, b), can be carried along in rotation by the rotary table (3),
**characterized in that** the second rotary table fixing apparatus (8) is independent of the first rotary table fixing apparatus (6),
**in that** the base (9) of the second rotary table fixing apparatus (8) can be fixed to the support (1) within the complete range of rotation of the rotary table (3) in any chosen rotary setting, and
**in that** the locking means (11a, b) of the second rotary table fixing apparatus (8) is independent of the fixing means (7) of the first rotary table fixing apparatus (6).

2. Mitre saw according to Claim 1, **characterized in that** the second rotary table fixing apparatus (8) has a latching arm as the base (9) and a latching arm fixing apparatus (10), and **in that** the latching arm (9) which forms the base can be fixed to the support (1) by the latching arm fixing apparatus (10) in any chosen angular setting.

3. Mitre saw according to Claim 2, **characterized in that** the latching arm (9) is rotatably mounted on a cylindrical mounting (12) of the support (1).

4. Mitre saw according to Claim 3, **characterized in that** the cylindrical mounting (12) and the latching arm fixing apparatus (10) are mutually engaged by means of corresponding thread turns, and **in that** the latching arm (9) can thus be clamped between the latching arm fixing apparatus (10) and the support (1) by a screw-clamping action.

5. Mitre saw according to Claim 3 or 4, **characterized in that** the latching arm fixing apparatus (10) has a latching arm actuating element (14) and a latching arm screwing element (15) in screwing engagement with the cylindrical mounting (12).

6. Mitre saw according to Claim 5, **characterized in that** the latching arm actuating element (14) is connected to the latching arm screwing element (15) by means of a slot-pin connection (16, 17).

7. Mitre saw according to one of Claims 1 to 6, **characterized in that** the locking means (11a, b), for the one part (11a), is assigned to the rotary table (3) and, for the other part (11b), is assigned to the base (9), and **in that**, when the base (9) is fixed, the one part (11a) of the locking means (11a, b) can be brought into engagement with the other part (11b) of the locking means (11a, b) by rotation of the rotary table (3).

8. Mitre saw according to Claim 7, **characterized in that** the one part (11a) of the locking means (11a, b) has a ball holder (18) containing a ball (19), **in that** the other part (11b) of the locking means (11a, b) is configured as a ball receiving fixture (20) in the base (9), with which the ball (19) can be brought into engagement.

9. Mitre saw according to Claim 8, **characterized in that** the one part (11a) and/or the other part (11b) of the locking means (11a, b) is elastically configured, in particular by virtue of the fact that the ball (19) is pretensioned by a spring (21) in the ball holder (18) and/or the base (9) yields resiliently to a force - in particular to a force acting in or parallel to the direction of the rotational axis of the rotary table (3).

10. Mitre saw according to Claim 8 or 9, **characterized in that** the part (11b) of the locking means (11a, b) which is assigned to the base (9) is flattened into a ramp shape at the contact sites (22) formed with the ball (19) when the rotary table (3) is rotated.

11. Mitre saw according to one of Claims 1 to 10,
**characterized in that** the support (1) comprises at least one stop (23a, b), which limits the rotary movement of the base (9) in a maximal angular adjustment.

12. Mitre saw according to Claim 11, **characterized in that**, in the case of a plurality of stops (23a, b), different angular settings are defined by the stops (23a, b), in particular 50° and 60° in relation to a middle setting.

## Revendications

1. Scie à onglets avec réglage de la position angulaire, comprenant un support (1),
une table tournante (3) disposée à rotation sur ou dans le support (1), formant une surface d'appui (2) pour la pièce,
un premier dispositif de fixation (6) pour la table tournante et
un deuxième dispositif de fixation (8) pour la table tournante,
la plage de rotation de la table tournante (3) étant limitée par rapport au support (1) par des positions maximales,
le premier dispositif de fixation (6) de la table tournante (3) pouvant être fixé par un moyen de fixation (7) par rapport au support (1) dans des positions angulaires particulières prédéfinies mécaniquement et par la construction à l'intérieur de la plage de rotation,
le deuxième dispositif de fixation (8) de la table tournante présentant une base (9) montée à rotation sur le support (1),
la table tournante (3) pouvant aussi tourner par rapport à la base (9),
un moyen de blocage (11a, b) agissant entre la table tournante (3) et la base (9),
la table tournante (3) étant connectée de manière détachable à la base (9) par le moyen de blocage (11a, b) dans une position rotative déterminée de la table tournante (3) par rapport à la base (9), et
la base pouvant être entraînée en rotation par la table tournante (3) avec elle dans la position dans laquelle elle n'est pas fixée au support mais est connectée à la table tournante (3) par le moyen de blocage (11a, b),
**caractérisée en ce que**
le deuxième dispositif de fixation (8) de la table tournante est indépendant du premier dispositif de fixation (6) de la table tournante,
**en ce que** la base (9) du deuxième dispositif de fixation (8) de la table tournante peut être fixé sur le support (1) dans une position de rotation quelconque dans la plage de rotation complète de la table tournante (3) et **en ce que** le moyen de blocage (11a, b) du deuxième dispositif de fixation (8) de la table tournante est indépendant du moyen de fixation (7) du premier dispositif de fixation (6) de la table tournante.

2. Scie à onglets selon la revendication 1, **caractérisée en ce que** le deuxième dispositif de fixation (8) de la table tournante présente un bras d'encliquetage en tant que base (9) et un dispositif de fixation (10) du bras d'encliquetage, et **en ce que** le bras d'encliquetage (9) formant la base peut être fixé par le dispositif de fixation (10) du bras d'encliquetage dans une position angulaire quelconque sur le support (1).

3. Scie à onglets selon la revendication 2, **caractérisée en ce que** le bras d'encliquetage (9) est monté à rotation sur une fixation cylindrique (12) du support (1).

4. Scie à onglets selon la revendication 3, **caractérisée en ce que** la fixation cylindrique (12) et le dispositif de fixation (10) du bras d'encliquetage sont en prise l'un avec l'autre par le biais de filetages correspondants, et **en ce que** le bras d'encliquetage (9) peut ainsi être serré fixement par un effet de serrage de vis entre le dispositif de fixation (10) du bras d'encliquetage et le support (1).

5. Scie à onglets selon la revendication 3 ou 4, **caractérisée en ce que** le dispositif de fixation (10) du bras d'encliquetage présente un élément d'actionnement de bras d'encliquetage (14) et un élément de vissage de bras d'encliquetage (15) en prise par vissage avec la fixation cylindrique (12).

6. Scie à onglets selon la revendication 5, **caractérisée en ce que** l'élément d'actionnement de bras d'encliquetage (14) est connecté à l'élément de vissage de bras d'encliquetage (15) au moyen d'une connexion par tourillon et trou oblong (16, 17).

7. Scie à onglets selon l'une quelconque des revendications 1 à 6, **caractérisée en ce que** le moyen de blocage (11a, b) est associé par une partie (11a) à la table tournante (3) et par l'autre partie (11b) à la base (9), et **en ce que** lorsque la base (9) est fixée par rotation de la table tournante (3), l'une des parties (11a) du moyen de blocage (11a, b) peut être amenée en prise avec l'autre partie (11b) du moyen de blocage (11a, b).

8. Scie à onglets selon la revendication 7, **caractérisée en ce que** l'une des parties (11a) du moyen de blocage (11a, b) présente une fixation de bille (18) comprenant une bille (19), **en ce que** l'autre partie (11b) du moyen de blocage (11a, b) est réalisée sous forme de logement de bille (20) dans la base (9), avec lequel la bille (19) peut être amenée en prise.

9. Scie à onglets selon la revendication 8, **caractérisée en ce que** l'une des parties (11a) et/ou l'autre partie (11b) du moyen de blocage (11a, b) est réalisée de manière élastique, notamment **en ce que** la bille (19) est précontrainte par un ressort (21) dans la fixation de bille (18) et/ou **en ce que** la base (9) cède élastiquement sous l'effet d'une force agissant notamment dans ou parallèlement à la direction de l'axe de rotation de la table tournante (3).

10. Scie à onglets selon la revendication 8 ou 9, **caractérisée en ce que** la partie (11b) du moyen de blocage (11a, b) associée à la base (9) est aplatie en forme de rampe au niveau des points de contact (22) résultant de la rotation de la table tournante (3) avec la bille (19).

11. Scie à onglets selon l'une quelconque des revendications 1 à 10, **caractérisée en ce que** le support (1) comprend au moins une butée (23a, b) qui limite dans un réglage de position angulaire maximal le mouvement de rotation de la base (9).

12. Scie à onglets selon la revendication 11, **caractérisée en ce que** dans le cas de plusieurs butées (23a, b), les butées (23a, b) définissent des positions angulaires différentes, notamment de 50° et de 60° par rapport à une position centrale.
